# EUROPEAN PATENT APPLICATION

(11) **EP 4 644 662 A1**
(43) Date of publication of application: **05.11.2025**
(21) Application number: 25160471.6
(22) Date of filing: 27.02.2025
(51) Int. Cl.: F01D 17/16

(54) **TORQUE TUBE WITH A HIRTH TOOTH COUPLING AND PROCESS FOR FORMING A TORQUE TUBE WITH A HIRTH TOOTH COUPLING**

(30) Priority: 02.05.2024 US 202418652854
(71) Applicant: RTX Corporation, Farmington, CT 06032 (US)
(72) Inventor: Grande, Nicolas, West Palm Beach, 33478 (US); McStay-Mikulik, Traci E., Portland, 97201 (US)
(74) Representative: Schmitt-Nilson Schraud Waibel Wohlfrom Patentanwälte Partnerschaft mbB

(57) **Abstract**

A torque tube 12 comprises a Hirth tooth coupling 16.

The Hirth tooth coupling comprises:
- a torque tube side 24 attached to a case 14 side 20 of the torque tube, a skipped tooth 32 and multiple torque tube side teeth 22 being formed in a torque tube side end face 30; and
- a bell crank side 26 in operative communication with the torque tube side opposite the case side of the torque tube, a cutout 40 and multiple bell crank side teeth 22 being formed in a bell crank side end face 30.

The skipped tooth is configured to operatively couple with the cutout to engage the torque tube side and the bell crank side of the Hirth tooth coupling, wherein the multiple torque tube side teeth are configured to engage with the multiple bell crank side teeth.

A process for forming the torque tube is also disclosed.

## Description

This invention was made with Government support under contracts N00019-23-F-0019 and N00019-21-G-0005 awarded by the United States Air Force. The government has certain rights in this invention.

The present disclosure is directed to the improved torque tube with a hirth tooth coupling.

In the kinematics system of a gas turbine engine, a linear actuator controls the angle of the variable inlet guide vanes (IGV). This linear motion is transformed into two separate motions via a torque box with bell cranks and drive links.

In order to actuate the linear actuator of the variable inlet guide vanes and transform the linear motion into a rotational motion, a torque tube with a hirth tooth joint is used. For the system to work properly the torque tube must be properly aligned during assembly.

Alignment of the torque tube to the bell crank has been accomplished by employing a flat milled onto the bolt that connects to the torque tube. During blind assembly, the torque tube can be misaligned up to one tooth off. This causes the schedule for the vanes to be off by more than 10 degrees. The misalignment will damage the torque tube in the assembly process.

After assembly, the original alignment feature would "feel" engaged even when the torque tube was not engaged correctly. The misalignment would trick the mechanic that the torque tube is in the correct spot. The mechanic would then torque down the nut and subsequently would shear through the alignment feature without the mechanic noticing.

In accordance with the present disclosure, there is provided a torque tube with a hirth tooth coupling comprising a torque tube side attached to a case side of the torque tube, a skipped tooth formed in a torque tube side end face, multiple torque tube side teeth formed in the torque tube side end face; a bell crank side in operative communication with the torque tube side opposite the case side of the torque tube, the bell crank side comprising a bell crank side end face, a cutout formed in the bell crank side end face, multiple bell crank side teeth formed in the bell crank side end face, wherein the skipped tooth is configured to operatively couple with the cutout to engage the torque tube side and the bell crank side of the hirth tooth coupling, wherein the multiple torque tube side teeth are configured to engage with the multiple bell crank side teeth responsive to the skipped tooth engaging with the cutout.

Particular embodiments further may include at least one, or a plurality of, the following optional features, alone or in combination with each other:

A further embodiment of any of the foregoing embodiments may additionally and/or alternatively include the skipped tooth comprises a portion of the torque tube end face that is not cut to a full height; and the multiple torque tube side teeth having full height tapered serrations that form grooves in the torque tube end face.

A further embodiment of any of the foregoing embodiments may additionally and/or alternatively include the skipped tooth comprises a flat surface configured to be received within the cutout.

A further embodiment of any of the foregoing embodiments may additionally and/or alternatively include the torque tube with a hirth tooth coupling further comprising asymmetrically locating an additional skipped tooth in the torque tube end face spaced apart from the skipped tooth at least one of the torque tube teeth apart.

A further embodiment of any of the foregoing embodiments may additionally and/or alternatively include the torque tube with a hirth tooth coupling further comprising asymmetrically locating an additional cutout in the bell crank end face spaced apart from the cutout at least one of the bell crank teeth apart.

A further embodiment of any of the foregoing embodiments may additionally and/or alternatively include the cutout comprises cutting out extra teeth from the bell crank side end face.

A further embodiment of any of the foregoing embodiments may additionally and/or alternatively include the torque tube with a hirth tooth further comprising an alignment feature formed by a meshing of the torque tube side equipped with the torque tube side teeth and the skipped tooth along with the bell crank side equipped with the combination of the bell crank side teeth and the cutout.

In accordance with the present disclosure, there is provided a torque tube with a hirth tooth coupling assembly comprising a case having a case receiver; and a torque tube inserted within the case receiver and extending along an axis, the torque tube having a case side; a hirth tooth coupling comprising a torque tube side attached to the case side of the torque tube, a skipped tooth formed in a torque tube side end face, multiple torque tube side teeth formed in the torque tube side end face; a bell crank side in operative communication with the torque tube side opposite the case side of the torque tube, the bell crank side comprising a bell crank side end face, a cutout formed in the bell crank side end face, multiple bell crank side teeth formed in the bell crank side end face, wherein the skipped tooth is configured to operatively couple with the cutout to engage the torque tube side and the bell crank side of the hirth tooth coupling, wherein the multiple torque tube side teeth are configured to engage with the multiple bell crank side teeth responsive to the skipped tooth engaging with the cutout; a bell crank in operative communication with the bell crank side.

Particular embodiments further may include at least one, or a plurality of, the following optional features, alone or in combination with each other:

A further embodiment of any of the foregoing embodiments may additionally and/or alternatively include the skipped tooth comprises a portion of the torque tube end face that is not cut to a full height; and the multiple torque tube side teeth having full height tapered serrations that form grooves in the torque tube end face.

A further embodiment of any of the foregoing embodiments may additionally and/or alternatively include the skipped tooth comprises a flat surface configured to be received within the cutout.

A further embodiment of any of the foregoing embodiments may additionally and/or alternatively include the torque tube with a hirth tooth coupling assembly further comprising asymmetrically locating an additional skipped tooth in the torque tube end face spaced apart from the skipped tooth at least one of the torque tube teeth apart.

A further embodiment of any of the foregoing embodiments may additionally and/or alternatively include the torque tube with a hirth tooth coupling assembly further comprising asymmetrically locating an additional cutout in the bell crank end face spaced apart from the cutout at least one of the bell crank teeth apart.

A further embodiment of any of the foregoing embodiments may additionally and/or alternatively include the cutout comprises cutting out extra teeth from the bell crank side end face.

In accordance with the present disclosure, there is provided a process forming a torque tube with a hirth tooth coupling assembly comprising a case having a case receiver; and inserting a torque tube within the case receiver; extending the torque tube along an axis, the torque tube having a case side; forming a hirth tooth coupling comprising a torque tube side attached to the case side of the torque tube; forming a skipped tooth in a torque tube side end face; forming multiple torque tube side teeth in the torque tube side end face; coupling a bell crank side in operative communication with the torque tube side opposite the case side of the torque tube; forming the bell crank side comprising a bell crank side end face; forming a cutout in the bell crank side end face; forming multiple bell crank side teeth in the bell crank side end face; operatively coupling the skipped tooth with the cutout to engage the torque tube side and the bell crank side of the hirth tooth coupling; configuring the multiple torque tube side teeth to engage with the multiple bell crank side teeth responsive to the skipped tooth engaging with the cutout; coupling a bell crank in operative communication with the bell crank side.

Particular embodiments further may include at least one, or a plurality of, the following optional features, alone or in combination with each other:

A further embodiment of any of the foregoing embodiments may additionally and/or alternatively include the process further comprising forming the skipped tooth as a portion of the torque tube end face in the absence of cutting the torque tube end face; and forming the multiple torque tube side teeth by cutting the torque tube end face to full height tapered serrations forming grooves in the torque tube end face.

A further embodiment of any of the foregoing embodiments may additionally and/or alternatively include the process further comprising forming the skipped tooth as a flat surface configured to be received within the cutout.

A further embodiment of any of the foregoing embodiments may additionally and/or alternatively include the process further comprising locating an additional skipped tooth in the torque tube end face spaced apart asymmetrically from the skipped tooth at least one of the torque tube teeth apart.

A further embodiment of any of the foregoing embodiments may additionally and/or alternatively include the process further comprising locating an additional cutout in the bell crank end face spaced apart asymmetrically from the cutout at least one of the bell crank teeth apart.

A further embodiment of any of the foregoing embodiments may additionally and/or alternatively include the process further comprising forming the cutout by cutting out extra teeth from the bell crank side end face.

A further embodiment of any of the foregoing embodiments may additionally and/or alternatively include the process further comprising forming an alignment feature by meshing the torque tube side with the bell crank side; equipping the torque tube side with a combination of the torque tube side teeth and the skipped tooth; and equipping the bell crank side with a combination of the bell crank side teeth and the cutout.

Other details of the torque tube with a hirth tooth coupling are set forth in the following detailed description and the accompanying drawings wherein like reference numerals depict like elements.
Fig. 1 is an isometric view schematic representation of an exemplary torque tube with a hirth tooth coupling assembly.
Fig. 2 is a side view schematic representation of an exemplary torque tube with a hirth tooth coupling assembly.
Fig. 3 is a schematic representation of an exemplary torque tube with a misaligned hirth tooth coupling.
Fig. 4 is a schematic representation of an exemplary torque tube side of a hirth tooth coupling.
Fig. 5 is a schematic representation of an exemplary bell crank side of a hirth tooth coupling.
Fig. 6 is a schematic representation of an exemplary torque tube with a hirth tooth coupling prior to engaging the hirth tooth coupling.
Fig. 7 is a schematic representation of an exemplary torque tube with a hirth tooth coupling during engaging the hirth tooth coupling.
Fig. 8 is a schematic representation of an exemplary torque tube with a hirth tooth coupling during engaging the hirth tooth coupling.
Fig. 9 is a schematic representation of an exemplary torque tube with a hirth tooth coupling after engaging and correct alignment of the hirth tooth coupling.

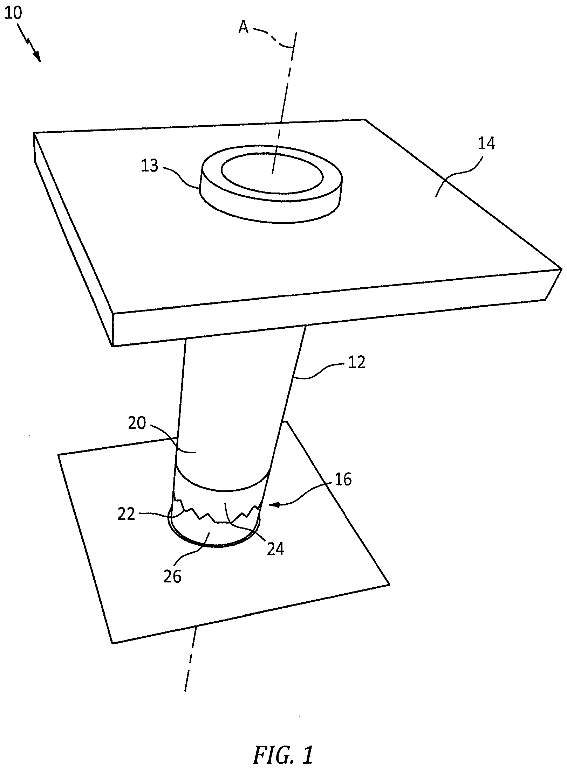

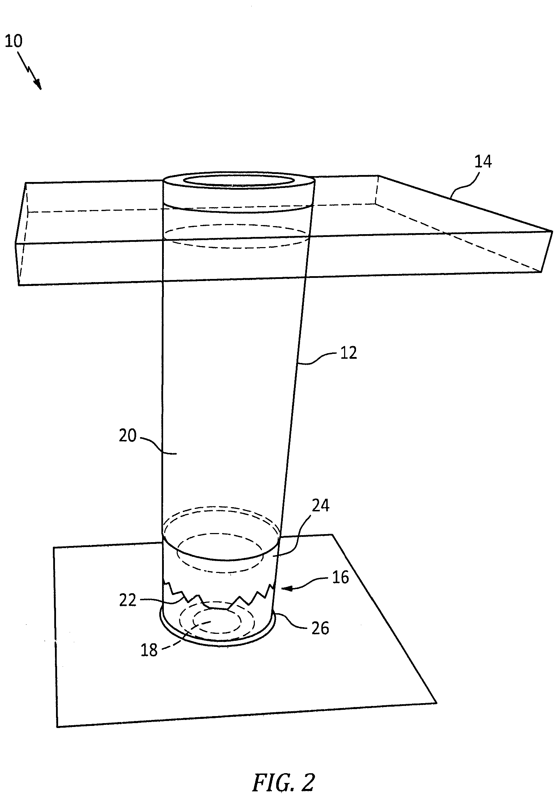

Referring now to Fig. 1 and Fig. 2, there is illustrated a torque tube with a hirth tooth coupling assembly 10. The torque tube with hirth tooth coupling assembly 10 includes a torque tube 12 with axis A. The torque tube 12 is shown inserted into a case receiver 13 of a case 14. A hirth tooth coupling 16 is attached to the torque tube 12. The hirth tooth coupling 16 is attached to a bell crank assembly 18 opposite the torque tube 12.

The hirth tooth coupling is similar to a Hirth joint in that the hirth tooth 16 is a type of mechanical connection. The hirth tooth coupling 16 is used to connect two pieces together. The hirth tooth coupling 16 joins the case side 20 of the torque tube 12 and the bell crank 18. The hirth tooth coupling 16 includes tapered teeth 22 that mesh together on the end faces 30 of each of a torque tube side 24 and bell crank side 26 of the hirth tooth coupling 16.

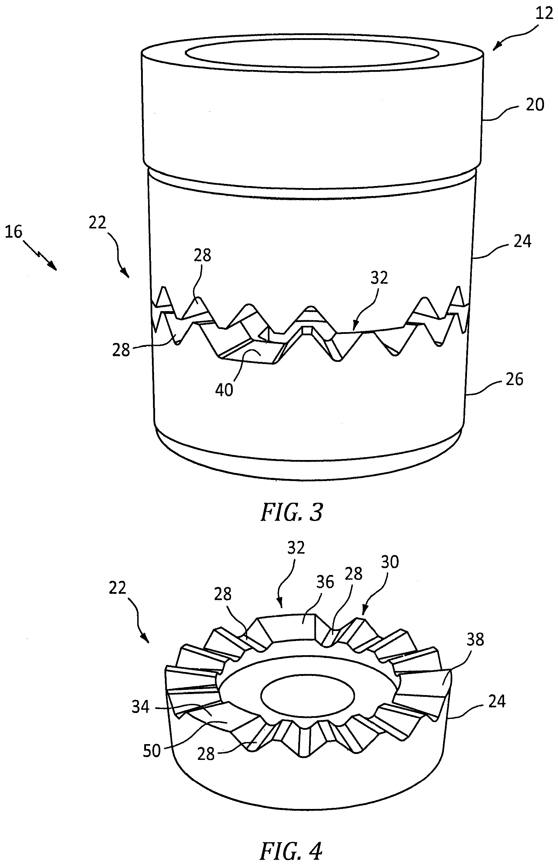

Referring also to Fig. 3, Fig. 4 and Fig 5, the hirth tooth coupling 16 joins radial teeth 22 formed by grooves 28 milled or ground into the end face 30 of each one of the torque tube side 24 and the bell crank side 26 with a cylindrical shape. The teeth 22 mesh, as the torque capacity of teeth 22 increases with their diameter.

The hirth tooth coupling 16 includes the torque tube side 24 that includes the multiple teeth 22 and modifies a traditional Hirth joint by not cutting all of the teeth 22 in the torque tube side 24. Instead, the hirth tooth coupling 16 includes an odd number of teeth 22. The hirth tooth coupling 16 includes skipped teeth 32, that is, three of the teeth are asymmetrically skipped from being cut into the end face 30 of the torque tube side 24.

In the exemplary embodiment shown, three skipped teeth 36 are not cut to a full height like the remaining teeth 22, as full height tapered serrations that form the grooves 28. As seen in Fig. 4, there are four tapered symmetrical serrations that form teeth 22. There is a first skipped tooth 34 positioned between four more tapered symmetrical serrations to form teeth 22. There is a second skipped tooth 36 positioned between four consecutive teeth 22 and three consecutive teeth 22. There is a third skipped tooth 38 between the three consecutive teeth 22 and the four consecutive teeth 22.

The use of three asymmetrically skipped teeth 32 helps to prevent tilting of the torque tube side 24 relative to the bell crank side 26.

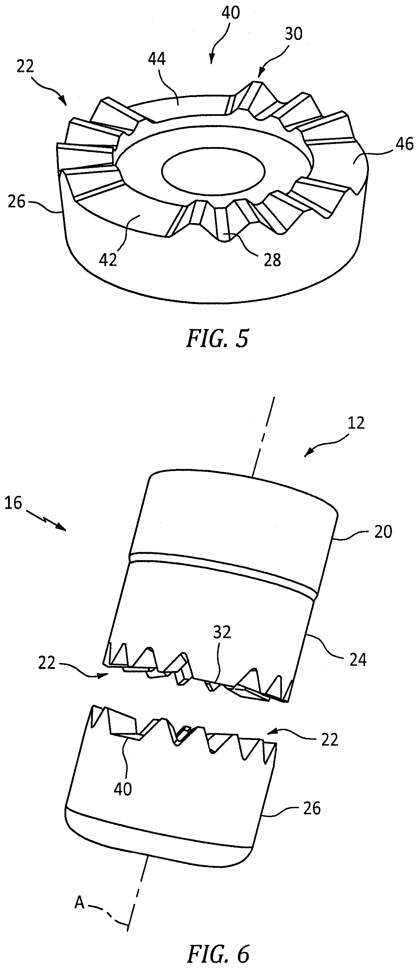

As seen in Fig. 5, the hirth tooth coupling 16 includes the bell crank side 26 that includes the multiple teeth 22 and modifies a traditional Hirth joint by cutting out extra teeth 22 from the end face of the bell crank side 26. A cutout 40 is formed when the teeth 22 are removed or cut out of the end face 30 of the bell crank side 26. Similarly to how the skipped teeth 32 are arranged, such as asymmetrically, a first cutout 42 can be formed in the bell crank side 26 and located between a set of four teeth 22 and another set of four teeth 22. A second cutout 44 can be located between a set of four teeth 22 and a set of three teeth 22. A third cutout 46 can be located between the set of three teeth 22 and the set of four teeth 22.

It is contemplated that other combinations of skipped teeth 32 and cutout 40 can be employed. For example a combination of four teeth 22, a skipped tooth 32, four teeth 22 then a skipped tooth 32 and three teeth 22 then a skipped tooth 32 can be employed. For example, a combination of two teeth 22 then a skipped tooth 32 and then two teeth 22 then a skipped tooth 32 and three teeth 22 and then a skipped tooth 32 can be employed. For example a combination of four teeth 22, a cutout 40, four teeth then a cutout 40 and three teeth then a cutout 40 can be employed. For example, a combination of two teeth 22 then cutout 40 and then two teeth 22 then cutout 40 and three teeth 22 and then cutout 40 can be employed.

The teeth 22 can have height and width dimensions that vary depending on the size of the torque tube 12 and bell crank 18. In an exemplary embodiment, the teeth 22 can be from 0.5 to 0.7 inches in height measured from the end face 30. It is also contemplated that the groove 28 depth as measured from the end face 30 can be varied to accommodate the longer teeth 22.

The hirth tooth coupling 16 relies upon the meshing of the torque tube side 24 equipped with the combination of teeth 22 and skipped teeth 32 along with the bell crank side 26 equipped with the combination of teeth 22 and cutout 40 to be an alignment feature 48.

In an exemplary embodiment, the teeth 22 can be formed as tapered, symmetrical serrations. A profile angle of the teeth 22 can be of 60 and 90 degrees. The load-bearing faces of the hirth tooth coupling 16 can be tapered, as shown. This allows the hirth tooth coupling 16 to be tightened so that there is no backlash by simply applying an axial load. The lack of backlash also reduces wear due to fretting.

As seen in Fig. 3, the hirth tooth coupling 16 is not aligned. The skipped teeth 32 is resting on top of teeth 22. The cutout 40 is opposite teeth 22. An operator or mechanic can recognize that the hirth tooth coupling 16 is not engaged but instead misaligned by evidence of the free movement between the torque tube side 24 and the bell crank side 26 of the hirth tooth coupling 16.

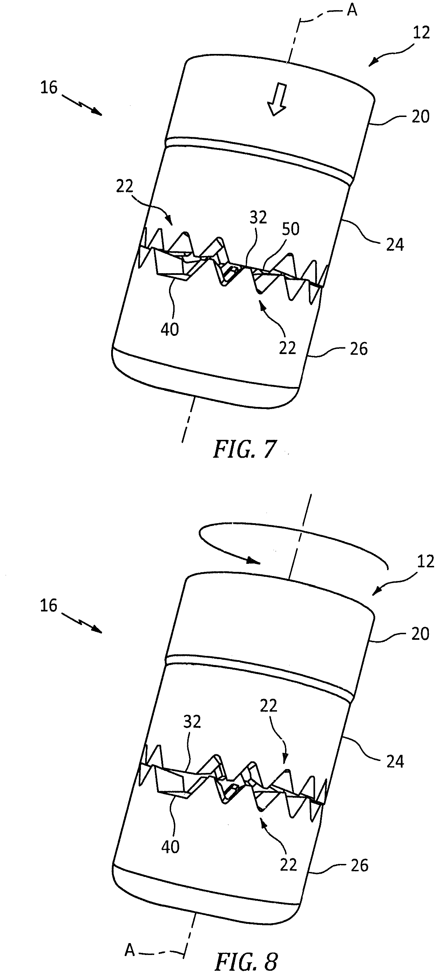

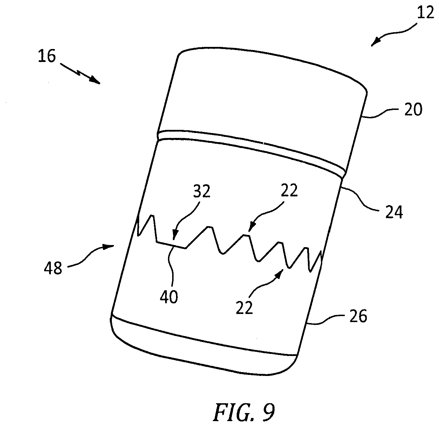

Referring also to Fig. 6, Fig. 7, Fig. 8, and Fig. 9, a sequence of assembly of the hirth tooth coupling 16 is shown. Starting with Fig. 6 the hirth tooth coupling 16 is shown separated. The hirth tooth coupling 16 is misaligned and cannot be engaged. It would not be possible for a mechanic to fasten together the hirth tooth coupling 16 in this configuration. At Fig. 7 the torque tube side 24 is brought into contact with the bell crank side 26 along the axis A, indicated by the arrow. There is a misalignment shown at Fig. 6. The teeth 22 of the torque tube side 24 are not meshing with the teeth 22 of the bell crank side 26. The skipped tooth 32 of the torque tube side 24 is misaligned with the cutout 40 of the bell crank side 26. At Fig. 7, the torque tube side 24 of the hirth tooth coupling 16 is rotated about the axis A, as indicated by the circular arrow. As the torque tube side 24 is rotated, the skipped tooth 32 prevents the torque tube side 24 from engaging the bell crank side 26. A flat surface 50 of the skipped tooth 32 rides over the top of the teeth 22 on the bell crank side 26. Once the skipped tooth 32 aligns with the cutout 40, the teeth 22 are aligned with each other such that the teeth 22 of each of the torque tube side 24 and bell crank side 26 of the hirth tooth coupling 16 mesh together as seen in Fig. 9. The hirth tooth coupling 16 can be bolted together to ensure a strong joint capable of withstanding torsional forces during vane actuation.

The mechanic performing the alignment procedure with the hirth tooth coupling 16 can more easily identify if the hirth tooth coupling 16 is aligned and engaged or misaligned. The torque tube 12 will have an extended first dimension along the axis A when the hirth tooth coupling 16 is misaligned. This first dimension can be measured. The torque tube 12 will be extended outwardly along the axis A. The extended posture can be visually detected by the mechanic. After the torque tube side 24 and the bell crank side 26 are aligned and mesh together, the torque tube 12 will slide axially along the axis A. The extended first dimension along the axis A will become shorter and be visually detected by the mechanic. The mechanic can measure the first dimension and confirm proper installation. This alignment can be verified by the mechanic and confirm that the hirth tooth coupling 16 is assembled correctly. Once the torque tube 12 is installed and the teeth 22 are freely sliding around each other, all the mechanic has to do is rotate the torque tube 12 until the teeth 22 in the assembly 10 engage. The mechanic can use the sense of touch for an assembly that is blind in nature providing a great benefit and ease of assembly as well as eliminating errors when installing the torque tube 12.

A technical advantage of the disclosed hirth tooth coupling can include a more intuitive assembly process for mechanics.

Another technical advantage of the disclosed hirth tooth coupling can include mistake proofing the assembly of the hirth tooth coupling.

Another technical advantage of the disclosed hirth tooth coupling can include a reduction in the chance of damaging threaded fasteners associated with the assembly of the hirth tooth coupling assembly.

Another technical advantage of the disclosed hirth tooth coupling can include an arrangement that simplifies the correct angular position of the torque tube without the chance of damaging the alignment feature.

Another technical advantage of the disclosed hirth tooth coupling can include the alignment feature cannot be bypassed.

There has been provided a hirth tooth coupling. While the hirth tooth coupling has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A torque tube with a hirth tooth coupling comprising:
a torque tube side attached to a case side of the torque tube, a skipped tooth formed in a torque tube side end face, multiple torque tube side teeth formed in the torque tube side end face; and
a bell crank side in operative communication with the torque tube side opposite the case side of the torque tube, the bell crank side comprising a bell crank side end face, a cutout formed in the bell crank side end face, multiple bell crank side teeth formed in the bell crank side end face, wherein the skipped tooth is configured to operatively couple with the cutout to engage the torque tube side and the bell crank side of the hirth tooth coupling, wherein the multiple torque tube side teeth are configured to engage with the multiple bell crank side teeth responsive to the skipped tooth engaging with the cutout.

2. The torque tube with a hirth tooth coupling according to claim 1, wherein the skipped tooth comprises a portion of the torque tube end face that is not cut to a full height; and the multiple torque tube side teeth having full height tapered serrations that form grooves in the torque tube end face.

3. The torque tube with a hirth tooth coupling according to claim 1 or 2, wherein the skipped tooth comprises a flat surface configured to be received within the cutout.

4. The torque tube with a hirth tooth coupling according to any of claims 1 to 3, further comprising:
asymmetrically locating an additional skipped tooth in the torque tube end face spaced apart from the skipped tooth at least one of the torque tube teeth apart.

5. The torque tube with a hirth tooth coupling according to any of claims 1 to 4, further comprising:
asymmetrically locating an additional cutout in the bell crank end face spaced apart from the cutout at least one of the bell crank teeth apart.

6. The torque tube with a hirth tooth coupling according to any of claims 1 to 5, wherein the cutout comprises cutting out extra teeth from the bell crank side end face.

7. The torque tube with a hirth tooth coupling according to any of claims 1 to 6, further comprising:
an alignment feature formed by a meshing of the torque tube side equipped with the torque tube side teeth and the skipped tooth along with the bell crank side equipped with the combination of the bell crank side teeth and the cutout.

8. A torque tube with a hirth tooth coupling assembly comprising the torque tube with a tooth coupling according to any of claims 1 to 7, and further comprising:
a case having a case receiver;
the torque tube being inserted within the case receiver and extending along an axis, the torque tube having a case side; and
a bell crank in operative communication with the bell crank side.

9. A process forming a torque tube with a hirth tooth coupling assembly comprising:
a case having a case receiver; and
inserting a torque tube within the case receiver;
extending the torque tube along an axis, the torque tube having a case side;
forming a hirth tooth coupling comprising a torque tube side attached to the case side of the torque tube;
forming a skipped tooth in a torque tube side end face;
forming multiple torque tube side teeth in the torque tube side end face;
coupling a bell crank side in operative communication with the torque tube side opposite the case side of the torque tube;
forming the bell crank side comprising a bell crank side end face;
forming a cutout in the bell crank side end face;
forming multiple bell crank side teeth in the bell crank side end face;
operatively coupling the skipped tooth with the cutout to engage the torque tube side and the bell crank side of the hirth tooth coupling;
configuring the multiple torque tube side teeth to engage with the multiple bell crank side teeth responsive to the skipped tooth engaging with the cutout; and
coupling a bell crank in operative communication with the bell crank side.

10. The process of claim 9, further comprising:
forming the skipped tooth as a portion of the torque tube end face in the absence of cutting the torque tube end face; and
forming the multiple torque tube side teeth by cutting the torque tube end face to full height tapered serrations forming grooves in the torque tube end face.

11. The process of claim 9 or 10, further comprising:
forming the skipped tooth as a flat surface configured to be received within the cutout.

12. The process of any of claims 9 to 11, further comprising:
locating an additional skipped tooth in the torque tube end face spaced apart asymmetrically from the skipped tooth at least one of the torque tube teeth apart.

13. The process of any of claims 9 to 12, further comprising:
locating an additional cutout in the bell crank end face spaced apart asymmetrically from the cutout at least one of the bell crank teeth apart.

14. The process of any of claims 9 to 13, further comprising:
forming the cutout by cutting out extra teeth from the bell crank side end face.

15. The process of any of claims 9 to 14, further comprising:
forming an alignment feature by meshing the torque tube side with the bell crank side;
equipping the torque tube side with a combination of the torque tube side teeth and the skipped tooth; and
equipping the bell crank side with a combination of the bell crank side teeth and the cutout.
